# EUROPEAN PATENT SPECIFICATION

(11) **EP 3 211 860 B1**
(45) Date of publication and mention of the grant of the patent: **27.03.2019**
(21) Application number: 16157749.9
(22) Date of filing: 26.02.2016
(51) Int. Cl.: H04L 29/08, G06Q 20/38, G06Q 20/34, G06Q 30/02, G06Q 20/20

(54) **MERCHANT LOYALTY DISCOUNTING PROCESS**
HÄNDLERLOYALITÄT-RABATTVERFAHREN
PROCESSUS DE REMISE DE FIDÉLITÉ DE MARCHAND

(43) Date of publication of application: 30.08.2017
(73) Proprietor: Mastercard International Incorporated, Purchase NY 10577 (US)
(72) Inventor: SINHA, Advait, London E14 9QT (GB); KENT, Rebecca, Grays Essex RM17 6QP (GB); BAGGOTT, James Richard, East Grinstead Sussex RH19 4EE (GB)
(74) Representative: Gill Jennings & Every LLP

(56) References cited:
- WO-A2-2008/052073
- US-A1- 2013 124 287
- US-A1- 2014 188 586
- US-A1- 2015 149 272

## Description

The present disclosure provides for a system and a method for automatically applying discounts to transactions conducted between eligible merchants and consumers.

### Background

It is common for merchants to offer discounts on the price of goods and services to their consumers, for example to consumers who pay for the goods or services with a payment card of a particular brand, such as a MasterCard™ card.

A merchant may offer a discount in order to target customers using payment cards of a given brand. Alternatively, the merchant may have an agreement in place with a payment card brand according to which the merchant is required to provide a discount on payments made with a payment card of a particular brand, such as a MasterCard™.

When discounts of this type are applied, an employee of the merchant may need to adjust the undiscounted fee to a reduced amount.

This can be a time consuming process and is subject to human error in calculating the reduced amount. Furthermore, the employees of the merchant may not themselves be aware of the correct discount to be applied to a given type of transaction. This provides a degree of uncertainty to a customer, who may not be confident that the discount has been correctly applied.

A merchant that offers a discount scheme of this type must typically bear the administrative & technical burden of calculating and applying discounts at the point of sale. This can involve developing, implementing and maintaining appropriate software and computing infrastructure. However, many small and mid-sized merchants do not have resources to dedicate to developments & support of such infrastructures.

US2014/0188586A1 teaches a method of processing of a transaction involving one or more third-parties.

US2013/0124287A1 teaches a system and method configured to use a transaction handler to modify the transaction amount of a transaction between an acquirer processor and an issuer processer.

WO2008/052073A2 teaches systems, methods, apparatus, means and computer program code, including receiving, from a point of interaction, an authorization request message identifying a requested purchase transaction, the authorization request message including data identifying a payment account identifier and a purchase amount; determining that the payment account identifier is eligible for a reward and selecting a reward message associated with the reward; and transmitting an authorization response message including the reward message to the point of interaction for display to an account holder.

US2015/0149272A1 teaches a system and method configured to use an authorization messaging system for payment processing to communicate, in real time during authorization of a payment transaction, loyalty reward information.

### Summary of invention

The present disclosure provides systems and methods for automatically applying discounts to transactions conducted between eligible merchants and consumers.

In one embodiment a computer implemented method of processing a payment transaction is provided. The method comprises: receiving, at a network server, from an acquiring institution server, an authorization request message for requesting authorization of the payment transaction, the payment transaction having been initiated at a first merchant and the authorization request message comprising a transaction amount of the payment transaction; determining, at the network server, based on the authorization request message, that the payment transaction is eligible for a discount; calculating, at the network server, a discounted transaction amount for the payment transaction, based at least on the transaction amount and a first discount rule associated with the first merchant; transmitting, from the network server to an issuing institution server, an updated authorization request message for requesting authorization of the payment transaction for the discounted transaction amount; and upon receiving a successful authorization response message from the issuing institution server in response to the updated authorization request message transmitting, from the network server to the acquiring institution server, a further authorization response message for authorizing the payment transaction for the discounted transaction amount.

The above method provides advantages over commonly used procedures for applying discounts to payment transactions. The application of discounts at the point of a network server of a payment network provider reduces the administrative and technical burden on merchants applying discounts.

In some example embodiments, the authorization request message comprises a plurality of data fields, at least one of the data fields representing the transaction amount.

In some example embodiments, determining that the payment transaction is eligible for a discount comprises accessing a merchant offer database, the merchant offer database comprising a plurality of discount rules and criteria defining the applicability of each of the plurality of discount rules, to determine whether the contents of the plurality of data fields in the authorization request message meets the criteria for applying at least one of the plurality of discount rules.

In some example embodiments, at least one of the criteria defining the applicability of the first discount rule is that at least one of the plurality of data fields in the authorization request message comprises data representing information associated with the first merchant.

In some example embodiments, at least one of the criteria defining the applicability of the first discount rule is that at least one of the plurality of data fields in the authorization request message comprises data representing a primary account number (PAN) that is within a predetermined range.

In some example embodiments, the method comprises generating the updated authorization request message by replacing the transaction amount in the authorization request message with the discounted transaction amount.

In some example embodiments, calculating the discounted transaction amount based on first discount rule comprises modifying the transaction amount to reduce the transaction amount by a predetermined percentage.

In some example embodiments, calculating the discounted transaction amount based on first discount rule comprises modifying the transaction amount by subtracting a fixed sum from the transaction amount.

In some example embodiments, the first discount rule associated with the first merchant is one of a plurality of discount rules associated with the first merchant, the first discount rule being chosen based the authorization request message.

In some example embodiments, the method further comprises: receiving, at a network server, from a second acquiring institution server, a second authorization request message for requesting authorization of a second payment transaction, the second payment transaction having been initiated at a second merchant and the second authorization request message comprising a second transaction amount of the second payment transaction; determining, at the network server, based on the second authorization request message, that the second payment transaction is eligible for a discount; calculating, at the network server, a second discounted transaction amount for the second payment transaction, based at least on the second transaction amount and a second discount rule associated with the second merchant; sending, from the network server to a second issuing institution server, a second updated authorization request message for requesting authorization of the second payment transaction for the second discounted transaction amount; and upon receiving a second successful authorization response message from the second issuing institution server in response to second the updated authorization request message transmitting, from the network server to the second acquiring institution server, a second further authorization response message for authorizing the second payment transaction for the second discounted transaction amount.

In some example embodiments, the second merchant and the first merchant are different.

In some example embodiments, the second discount rule and the first discount rule are different.

In some example embodiments, a PAN represented in the first authorization request message is the same as a PAN represented in the second authorization request message.

Also provided is a system comprising: a database for storing data associated with a plurality of merchants; at least one communication node for receiving authorization request messages concerning payment transactions initiated at the plurality of merchants; and a processor configured to perform the steps of any preceding claim to process the payment transactions.

In some example embodiments, the database is configured to allow the plurality of merchants to add or modify discount rules applicable to the payment transactions.

### Brief description of the figures

Figure 1a depicts an operating model for processing payment transactions;
Figure 1b depicts a flow diagram of the processes which occur in accordance with the operating model;
Figure 2 depicts steps of a process of applying discounts to a payment transaction according to some example embodiments;
Figure 3 is a schematic depiction of the transfer of data in some example embodiments.
Figure 4 depicts a system configured to perform steps in a process of applying discounts to a payment transaction according to some example embodiments.

### Detailed description

The present disclosure provides an efficient and reliable process for automatically applying discounts to payment transactions. Rather than applying discounts to payments at the point of sale, the operator of a payment processing system (such as MasterCard™) automatically applies a discount during a payment authorization process. In some embodiments the payment network provider maintains a merchant offer database of discounts offered by various merchants and applies the discount in accordance with discount rules recorded in the database.

In some embodiments the payment network provider determines which discount rule to apply by using data contained in the payment authorization message of a standard payment transaction. One advantage of this approach is that the automatic discounting process may be used in conjunction with standardised protocols for payment transaction authorization and obviates the need for additional processing or infrastructure on the part of the merchant.

In some embodiments the steps of the present invention are performed at a network server of a payment processing system that forms part of a four-party payment system.

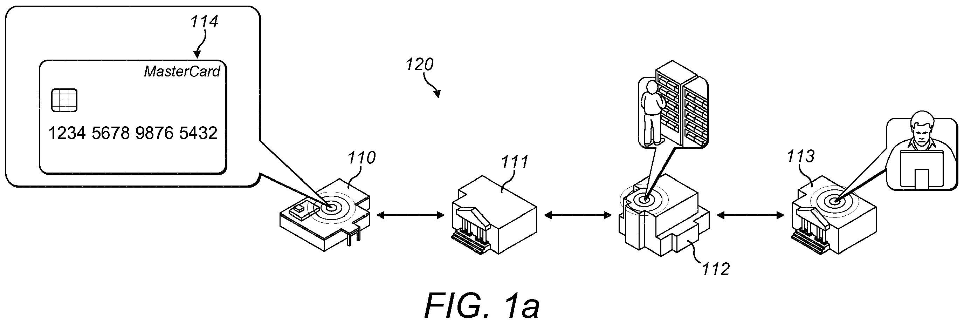

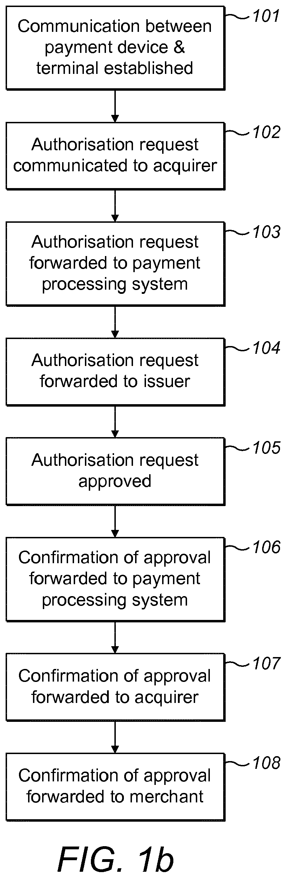

Figure 1a depicts an operating model of the parties involved when a payment card 114 is used to perform a transaction over a four-party payment system. Figure 1b depicts a flow diagram of the processes which occur in the four-party payment system of Figure 1a. Together, Figures 1a and 1b show a successful transaction made using the four-party payment system.

The model includes a payment card 114 and a terminal 109 (sometimes referred to as a "Point of Sale" or POS terminal). The terminal 109 is typically retained by a merchant 110. It will be understood by the skilled person that such payment transactions can also be made in online stores using similar steps.

The merchant 110 typically has a contract with a financial institution to accept payments from payment cards 114. That financial institution (i.e. the merchant's bank) is the acquiring institution 111. The issuing institution 113 (i.e. the customer's bank) is the financial institution that has issued the payment card 114 to a particular customer. The acquiring institution 111 and the issuing institution 113 are linked by the payment processing system 112. Together, the merchant 110, the acquiring institution 111, the payment processing system 112, and the issuing institution 113 form a payment processing network 120.

In the exemplary operating model of Figure 1, the payment card 114 is presented to the merchant 110 who possesses the terminal 109.

The terminal 109 then generates and communicates an authorization request to the acquiring institution 111 (step 102). The acquiring institution 111 forwards the request on to the payment processing system 112 (step 103), which determines which issuing institution 113 is associated with the payment card 114. The payment processing system 112 then forwards the authorization request on to the issuing institution 113 for transaction approval (step 104).

The issuing institution 113 then checks certain criteria, such as account status, and approves the authorization request if those checks return satisfactory results (step 105). This approval is then forwarded on to the acquiring institution 111 via the payment processing system 112 (steps 106 and 107). The acquiring institution 111 transmits the approval on to the merchant 110, which receives confirmation via the terminal 109 (step 108).

The authorization requests and authorization responses typically take the form of a message sent in accordance with a known messaging standard. In the present disclosure, the ISO 8583 standard is used as an example of such a messaging standard, though it will be understood by the skilled person that other standards and variations thereof may be used.

A message sent using the ISO 8535 standard contains three components: (1) a message type indicator (MTI), which indicates the version of ISO 8535 being used, the purpose of the message, the function of the message and the origin of the message; (2) a bitmap indicating which data fields are present; and (3) a main message including the data fields indicated by the bitmap.

Each of the data fields included in the main message has a standardized form. For example, in some versions of ISO 8535, field 2, representing the primary account number (PAN) comprises 19 numeric digits, whereas field 4, representing the transaction amount comprises 12 numeric digits. There are 128 possible data fields, many of which are reserved, including representations of the PAN, the merchant number, the transaction amount, and the transaction date and time. The bitmap, which precedes the main message, indicates which of the data fields are included in the main message. The bitmap is used to interpret the main message by associating different segments of the string of characters that form the main message with data fields defined by the messaging standard.

Throughout normal four-party authorization processes, as described above, the exact form of the message may be changed between different steps of the process, e.g. to comply with a different messaging standard. In known payment authorization processes, the information represented by the transaction amount field remains the same throughout the authorization process.

The present disclosure provides processes in which the data fields of a payment authorization message are manipulated according to predetermined rules in order to automatically apply discounts to payment transactions at the point of the payment processing system 112. This reduces the financial and technological burden on merchants in comparison to systems in which discounts are applied at the point of sale.

For completeness, the description of the processes performed at the point of the payment processing system 112 makes reference to other entities involved in the payment transaction.

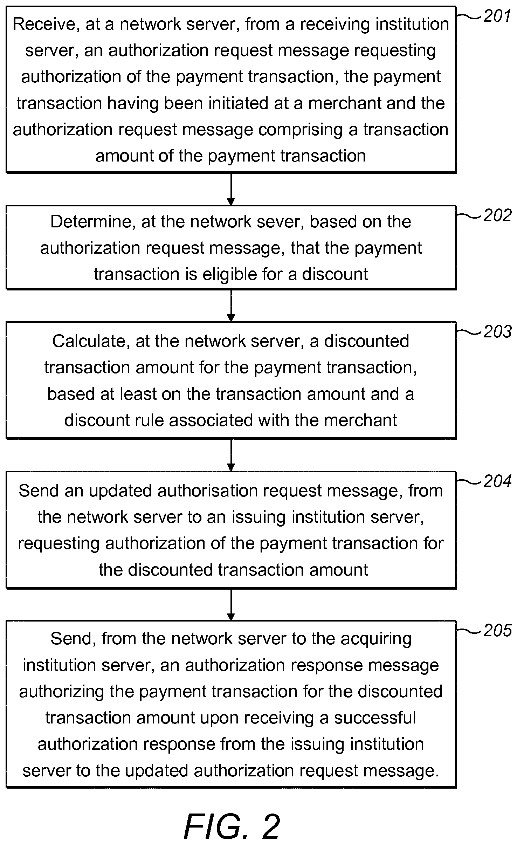

Figure 2 shows a flow diagram showing steps performed at a network server of a payment processing system (such as the payment processing system 122 discussed with reference to Figs. 1a and 1b) when a discount is applied to a transaction according to embodiments of the disclosed method.

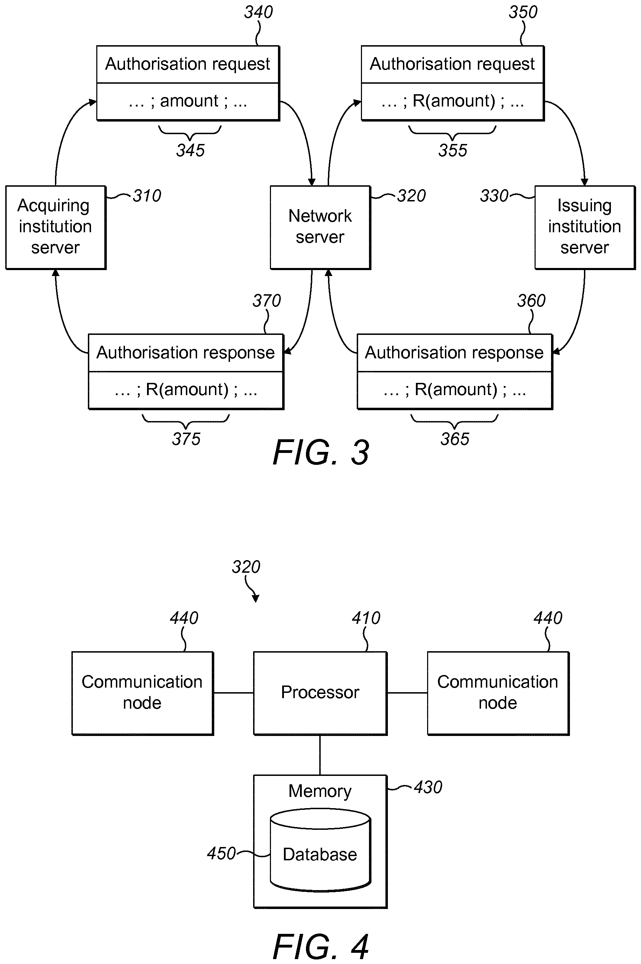

The network server may comprise at least one processor and communication nodes, as described with reference to Figure 4.

In embodiments where a discount is applied to a transaction made over a four-party payment system, such as the system described with reference to Figure 1, the network server forms part of the payment processing system 112. It will be understood by the skilled person, however, that the steps described herein are applicable to a number of payment transaction protocols and that the network server may be part of a payment processing system adapted for use with other payment transaction protocols.

A discounted payment according to embodiments of the present invention begins when a customer initiates a payment to a merchant (such as the merchant 110 discussed with reference to Figs. 1a and 1b) for goods or services using a payment card for which the merchant 110 has agreed to provide a discount. The purchase can be made at an online retailer or in store.

The merchant 110 then communicates an authorization request message to an acquiring institution (such as the acquiring institution 111 discussed with reference to Figs. 1a and 1b). The authorization request message includes a request to authorize a transaction for the original undiscounted cost of the goods or services. In some examples, the authorization request message is in the form of an ISO 8583 message in which one of the data fields defined by the bitmap is a transaction amount field and in which a part of the main message defines the transaction amount as being the original undiscounted cost of the goods or services.

The acquiring institution 111 then transmits, from an acquiring institution server, the authorization request message, to a network server of the payment processing system 112. One of the data fields of the authorization request message indicates that the authorization request is for the initial undiscounted amount.

The payment processing system 112 receives, at a network server forming part of the payment processing system 112, the authorization request for a payment transaction for the undiscounted amount (step 201).

The payment processing system 112 then determines whether the payment transaction is eligible for a discount (step 202).

In order to determine whether the payment transaction is eligible for a discount, the data included in the transaction authorization request message is compared with data stored in a merchant offer database. The merchant offer database comprises details of a number of discount rules that define discount offers for subscribing merchants. Each of the discount rules is associated with various data that could form part of an authorization request message. If data in the authorization request message meets criteria associated with a discount rule in the merchant offer database, the payment transaction is eligible for a discount.

In some examples, the merchant offer database comprises a list of merchants 110 having discount agreements. For each merchant 110 on the list of merchants, the merchant offer database provides a series of discount rules.

For example, one merchant 110 on the list of merchants could have two discount rules, which apply to authorization requests in which the PAN of the payment card used to make the authorization request falls within two respective ranges. In such an example, the first rule could apply to authorization requests in which the leading 6 digits of the PAN are 100000 and the second rule could apply to authorization request in which the leading 6 digits are 100001.

In some examples the merchant offer database is stored in the memory of a computer that is part of payment processing system 112. In other embodiments, the merchant offer database is stored in the memory of a separate computer system and is accessed remotely by the payment processing system 112.

In some examples, the discount rules depend on the initial undiscounted transaction amounts. For example, a first rule could apply to transactions in which the undiscounted transaction amount is less than £100 and a second rule could apply to transactions in which the undiscounted transaction amount is greater than £100.

Examples of possible discount rules include reducing the transaction amount by a predetermined percentage, or subtracting a predetermined sum from the initial transaction amount.

In general, for each merchant 110 on the merchant list there may be any number of associated discount rules. The applicability of each discount rule to a given transaction is determined by whether data included in the authorization request message (for the transaction) provided by the acquiring institution 111 meets certain criteria. Each discount rule may be associated, in the merchant offer database, with any number of criteria. Therefore, different discount rules may be applied to different payment transactions to the same merchant 110 if the data contained in the authorization request messages is different.

In general, the criteria associated with discount rules may define necessary conditions for the discount to be applied to the transaction (e.g. a first discount rule is applied to authorization request messages in which "the merchant is merchant x" AND "the transaction amount is greater than £100") or sufficient conditions for the discount to be applied to the transaction (e.g. a second discount rule is applied to authorization message in which "the merchant is merchant z OR the transaction amount is less than £50").

In some embodiments, the system run by the network server enables merchants 110 to edit the merchant offer database through a merchant portal in order to enter new customized discount rules or edit previously existing discount rules. In some examples, this allows merchants 110 to target customer segments in real time with new offers.

As merchants 110 can update offers by accessing the merchant portal, identical authorization request messages can result in the application of different discount rules if such messages are received at different times (or one transaction may be eligible for a discount while another is not.) This is because the criteria associated with a given discount rule may be updated after receiving a first authorization message and before receiving a second identical authorization message.

As the system enables merchants 110 to provide discount rules that are based on any aspect of the authorization request message, different discount rules can be applicable to transactions initiated at the same merchant 110 (or one transaction may be eligible for a discount while another is not).

If the network server determines that the transaction is not eligible for a discount, the network server proceeds to forward the authorization request to an issuing institution (such as the issuing institution 113 discussed with reference to Figs. 1a and 1b) with the initial undiscounted transaction amount and the transaction proceeds according to standard card payment protocols. The transaction will not be eligible for a discount if the authorization message does not meet the criteria for any of the discount rules. For example, the transaction will not be eligible for a discount if the merchant 110 to whom to a payment is being made is not associated with any of the discount rules, or if there is no discount rule associated with the PAN range of the payment card, or the transaction amount is excluded from the discount rules of the merchant 110 to whom the payment is being made.

If the network server determines that a discount rule does apply to the transaction, the network server calculates a discounted transaction amount based on at least the transaction amount and the discount rule (step 203). The discount rule is typically a function having the undiscounted transaction amount as its argument.

In some examples, the step of calculating the discounted transaction amount comprises determining the applicable discount rule, Rᵢ(a), based on the merchant offer database and the authorization request message, inputting the initial transaction amount as a value of the argument for the discount rule, and calculating the output of the discount rule function.

As an illustrative example, the merchant offer database may return *R*₁(*a*) = 0.9 × *a* as the correct discount rule for a given authorization request (i.e. at a given merchant, using a given PAN, for a given initial transaction amount etc.) If the initial transaction amount was £200, the discounted transaction amount based on the discount rule, R₁(a) would be £180.

The network server then generates and transmits an updated authorization request message, to an issuing institution server, in order to request authorization of the payment transaction for the discounted transaction amount (step 204).

In some examples the updated authorization request message is also an ISO 8583 message in which the main message has been modified such that the data in the transaction amount field has been updated to reflect the discounted transaction amount.

The issuing institution server receives the authorization request for the discounted transaction amount and checks certain criteria. If those checks return satisfactory results, the issuing institution server returns a successful authorization response message to the network server of the payment processing system 112. The successful authorization response message authorizes the transaction for the discounted amount in the updated authorization request message.

Upon receiving the successful authorization response message from the server of the issuing institution 113, the network server transmits an authorization response message authorizing the payment transaction for the discounted transaction amount to a server of the acquiring institution 111 (step 205).

The acquiring institution 111 then transmits a further authorization response message to the merchant 110 indicating that a transaction for the discounted transaction amount has been approved.

Figure 3 shows a schematic representation of the transfer of messages according to examples of the payment processing method.

A acquiring institution server 310 transmits an authorization request message 340 comprising a number of data fields to the network server 320 of a payment processing system (such as the payment processing system 112 described with reference to Figs. 1a and 1b). One of the data fields of the authorization request message 340 includes a transaction amount 345 that corresponds to the undiscounted value of a purchase at the merchant 110.

The network server 320 then generates an updated authorization request message 350. One of the data fields of the updated authorization request message 350 represents a discounted transaction amount 355 that has been determined based on the initial transaction amount 345 and an appropriate discount rule (as described with reference to Figure 2)..

The network server 320 then transmits the updated message 350 to an issuing institution server 330.

The issuing institution server 330 responds to the network server 320 with an authorization response message 360 comprising a number of data fields. One of the data fields of the authorization response message 360 comprises a transaction amount 365 that corresponds to the discounted transaction amount 355 of the updated authorization response message 350.

The network server 320 then transmits a further authorization response message 370 to the acquiring institution server 310. One of the data fields of the authorization response message 370 comprises a transaction amount 375 that corresponds to the discounted transaction amount 355 of the updated authorization response message 350.

A payment is thereby authorized for a discounted transaction 355 amount rather than the initial undiscounted transaction amount 345.

Figure 4 shows a schematic diagram of a network server 320 that forms part of the payment processing system (such as the payment processing system 112 described with reference to Figs. 1a and 1b) and performs the steps of some embodiments of the present invention.

The network server 320 includes a computer processor 410 operatively coupled to a number of communication nodes, and a storage device 430.

The communication nodes 440 comprise an acquiring institution network node for receiving an authorization request message from an acquiring institution or sending an authorization response message to a acquiring institution. The communication nodes 440 also comprise an issuing institution network node for sending an authorization request message to an issuing institution or receiving an authorization response message from an issuing institution.

In some embodiments, the computer processor 410 comprises one or more conventional processors. Processor 410 operates to execute processor-executable steps, contained in program instructions so as to control the network server 400 to provide desired functionality, such as the processes described with reference to Figures 2 and 3.

Storage device 430 may comprise any appropriate information storage device, including combinations of magnetic storage devices (e.g., magnetic tape and hard disk drives), optical storage devices such as CDs and/or DVDs, and/or semiconductor memory devices such as Random Access Memory (RAM) devices and Read Only Memory (ROM) devices, as well as so-called flash memory.

Storage device 430 stores one or more programs for controlling processor 410. The programs comprise program instructions that contain processor-executable process steps of network server 400, including, in some cases, process steps that constitute processes provided in accordance with principles of the present invention described herein.

The storage device 430 also stores a merchant offer database 450 suitable for storing merchant discount data. The merchant discount data may comprise a list of merchants, a list of discount rules associated with each merchant, and a list of authorization request message criteria associated with each discount rule.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

Although the present invention has been described in connection with specific exemplary embodiments, it should be understood that various changes, substitutions, and alterations apparent to those skilled in the art can be made to the disclosed embodiments without departing from the scope of the invention as set forth in the appended claims. Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

## Claims

1. A computer implemented method of processing a payment transaction, comprising:
receiving, at a network server (320), from an acquiring institution server (310), an authorization request message (340) for requesting authorization of the payment transaction, the payment transaction having been initiated at a first merchant and the authorization request message comprising a transaction amount (345) of the payment transaction;
determining, at the network server (320), based on the authorization request message, that the payment transaction is eligible for a discount;
calculating, at the network server, a discounted transaction amount for the payment transaction (333), based at least on the transaction amount (345) and a first discount rule associated with the first merchant, wherein the first discount rule associated with the first merchant is one of a plurality of discount rules associated with the first merchant, and wherein at least one of the criteria defining the applicability of the first discount rule is that at least one of the plurality of data fields in the authorization request message comprises data representing a primary account number (PAN) that is within a predetermined range;
transmitting, from the network server (320) to an issuing institution server (330), an updated authorization request message (350) for requesting authorization of the payment transaction for the discounted transaction amount; and
upon receiving a successful authorization response message (360) from the issuing institution server (330) in response to the updated authorization request message (350)
transmitting, from the network server (320) to the acquiring institution server (310), a further authorization response message (370) for authorizing the payment transaction for the discounted transaction amount (365).

2. The method of any preceding claim, where
the authorization request message (340) comprises a plurality of data fields, at least one of the data fields representing the transaction amount (345).

3. The method of claim 2, wherein
determining that the payment transaction is eligible for a discount comprises accessing a merchant offer database (450), the merchant offer database comprising a plurality of discount rules and criteria defining the applicability of each of the plurality of discount rules, to determine whether the contents of the plurality of data fields in the authorization request message meets the criteria for applying at least one of the plurality of discount rules.

4. The method of claim 3, wherein
at least one of the criteria defining the applicability of the first discount rule is that at least one of the plurality of data fields in the authorization request message comprises data representing information associated with the first merchant.

5. The method of any preceding claim, further comprising
generating the updated authorization request message (350) by replacing the transaction amount (345) in the authorization request message with the discounted transaction amount (355).

6. The method of any preceding claim, wherein
calculating the discounted transaction amount based (355) on first discount rule comprises modifying the transaction amount (345) to reduce the transaction amount by a predetermined percentage.

7. The method of any of claims 1-5, wherein
calculating the discounted transaction (355) amount based on first discount rule comprises modifying the transaction amount (345) by subtracting a fixed sum from the transaction amount.

8. The method of any preceding claim, further comprising:
receiving, at a network server (320), from a second acquiring institution server, a second authorization request message for requesting authorization of a second payment transaction, the second payment transaction having been initiated at a second merchant and the second authorization request message comprising a second transaction amount of the second payment transaction;
determining, at the network server (320), based on the second authorization request message, that the second payment transaction is eligible for a discount;
calculating, at the network server (320), a second discounted transaction amount for the second payment transaction, based at least on the second transaction amount and a second discount rule associated with the second merchant;
sending, from the network server (320) to a second issuing institution server, a second updated authorization request message for requesting authorization of the second payment transaction for the second discounted transaction amount; and
upon receiving a second successful authorization response message from the second issuing institution server in response to second the updated authorization request message
transmitting, from the network server to the second acquiring institution server, a second further authorization response message for authorizing the second payment transaction for the second discounted transaction amount.

9. The method of claim 8, wherein
the second merchant and the first merchant are different.

10. The method of claim 8 or claim 9, wherein
the second discount rule and the first discount rule are different.

11. The method of any of claims 8-10, wherein
a PAN represented in the first authorization request message is the same as a PAN represented in the second authorization request message.

12. A system comprising:
a database (450) for storing data associated with a plurality of merchants;
at least one communication node (440) for receiving authorization request messages concerning payment transactions initiated at the plurality of merchants; and
a processor (410) configured to perform the steps of any preceding claim to process the payment transactions.

13. The system of claim 12, wherein
the database (450) is configured to allow the plurality of merchants to add or modify discount rules applicable to the payment transactions.

## Patentansprüche

1. Computerimplementiertes Verfahren zum Verarbeiten einer Zahlungstransaktion, das Folgendes umfasst:
Empfangen einer Autorisierungsanforderungsnachricht (340) an einem Netzwerkserver (320) von einem Erfassungsinstitutionsserver (310) zum Anfordern einer Autorisierung der Zahlungstransaktion, wobei die Zahlungstransaktion bei einem ersten Händler eingeleitet wurde und die Autorisierungsanforderungsnachricht einen Transaktionsbetrag (345) der Zahlungstransaktion umfasst;
Bestimmen am Netzwerkserver (320) basierend auf der Autorisierungsanforderungsnachricht, dass die Zahlungstransaktion für einen Rabatt in Frage kommt;
Berechnen eines ermäßigten Transaktionsbetrags für die Zahlungstransaktion am Netzwerkserver (333) basierend auf dem Transaktionsbetrag (345) und einer ersten Rabattregel, die dem ersten Händler zugeordnet ist, wobei die erste Rabattregel, die dem ersten Händler zugeordnet ist, eine von mehreren Rabattregeln ist, die dem ersten Händler zugeordnet sind, und wobei mindestens eines der Kriterien, die die Anwendbarkeit der ersten Rabattregel definieren, darin besteht, dass mindestens eines der Vielzahl von Datenfeldern in der Autorisierungsanforderungsnachricht Daten umfasst, die eine primäre Kontonummer (Primary Account Number, PAN) darstellen, die sich innerhalb eines vorbestimmten Bereichs befindet;
Übertragen einer aktualisierten Autorisierungsanforderungsnachricht (350) von dem Netzwerkserver (320) an einen Ausstellungsinstitutionsserver (330), um die Autorisierung der Zahlungstransaktion für den ermäßigten Transaktionsbetrag anzufordern; und
nach Empfang einer erfolgreichen Autorisierungsantwortnachricht (360) vom Ausstellungsinstitutionsserver (330) als Antwort auf die aktualisierte Autorisierungsanforderungsnachricht (350),
Übertragen einer weiteren Autorisierungsantwortnachricht (370) von dem Netzwerkserver (320) an den Erfassungsinstitutionsserver (310) für die Autorisierung der Zahlungstransaktion für den ermäßigten Transaktionsbetrag (365).

2. Verfahren nach einem der vorhergehenden Ansprüche, wobei
die Autorisierungsanforderungsnachricht (340) eine Vielzahl von Datenfeldern umfasst, wobei mindestens eines der Datenfelder den Transaktionsbetrag (345) darstellt.

3. Verfahren nach Anspruch 2, wobei
das Bestimmen, dass die Zahlungstransaktion für ein Rabattangebot berechtigt ist, den Zugriff auf eine Händlerangebotsdatenbank (450) umfasst, wobei die Händlerangebotsdatenbank eine Vielzahl von Rabattregeln und Kriterien umfasst, die die Anwendbarkeit jeder der Vielzahl von Rabattregeln definieren, um zu bestimmen, ob der Inhalt der Vielzahl von Datenfeldern in der Autorisierungsanforderungsnachricht die Kriterien zum Anwenden von mindestens einer der Vielzahl von Rabattregeln erfüllt.

4. Verfahren nach Anspruch 3, wobei
mindestens eines der Kriterien, die die Anwendbarkeit der ersten Rabattregel definieren, darin besteht, dass mindestens eines der Vielzahl von Datenfeldern in der Autorisierungsanfragenachricht aus Daten besteht, die Informationen repräsentieren, die dem ersten Händler zugeordnet sind.

5. Verfahren nach einem der vorhergehenden Ansprüche, das ferner Folgendes umfasst:
Erzeugen der aktualisierten Autorisierungsanforderungsnachricht (350) durch Ersetzen des Transaktionsbetrags (345) in der Autorisierungsanforderungsnachricht durch den ermäßigten Transaktionsbetrag (355).

6. Verfahren nach einem der vorhergehenden Ansprüche, wobei
das Berechnen des ermäßigten Transaktionsbetrags basierend auf (355) auf der ersten Rabattregel das Modifizieren des Transaktionsbetrags (345) umfasst, um den Transaktionsbetrag um einen vorbestimmten Prozentsatz zu reduzieren.

7. Verfahren nach einem der Ansprüche 1 bis 5, wobei
das Berechnen des ermäßigten Transaktionsbetrags (355) basierend auf der ersten Rabattregel das Modifizieren des Transaktionsbetrags (345) durch Abziehen eines festen Betrags von dem Transaktionsbetrag umfasst.

8. Verfahren nach einem der vorhergehenden Ansprüche, das ferner Folgendes umfasst:
Empfangen einer zweiten Autorisierungsanforderungsnachricht an einem Netzwerkserver (320) von einem zweiten Erfassungsinstitutionsserver zum Anfordern einer Autorisierung einer zweiten Zahlungstransaktion, wobei die zweite Zahlungstransaktion bei einem zweiten Händler eingeleitet wurde und die zweite Autorisierungsanforderungsnachricht einen zweiten Transaktionsbetrag der zweiten Zahlungstransaktion umfasst;
Bestimmen am Netzwerkserver (320) basierend auf der zweiten Autorisierungsanforderungsnachricht, dass die zweiten Zahlungstransaktion für einen Rabatt in Frage kommt;
Berechnen an dem Netzwerkserver (320) eines zweiten ermäßigten Transaktionsbetrags für die zweite Zahlungstransaktion basierend auf dem zweiten Transaktionsbetrag und einer zweiten Rabattregel, die dem zweiten Händler zugeordnet ist;
Senden einer zweiten aktualisierten Autorisierungsanforderungsnachricht von dem Netzwerkserver (320) an einen zweiten Ausstellungsinstitutionsserver, um die Autorisierung der zweiten Zahlungstransaktion für den zweiten ermäßigten Transaktionsbetrag anzufordern; und
nach Empfang einer zweiten erfolgreichen Autorisierungsantwortnachricht von dem zweiten Ausstellungsinstitutionsserver als Antwort auf die zweite aktualisierte Autorisierungsanforderungsnachricht,
Übertragen einer zweiten weiteren Autorisierungsantwortnachricht von dem Netzwerkserver an den zweiten Erfassungsinstitutionsserver für die Autorisierung der zweiten Zahlungstransaktion für den zweiten ermäßigten Transaktionsbetrag.

9. Verfahren nach Anspruch 8, wobei
sich der zweite Händler und der erste Händler unterscheiden.

10. Verfahren nach Anspruch 8 oder Anspruch 9, wobei
sich die zweite Rabattregel und die erste Rabattregel unterscheiden.

11. Verfahren nach einem der Ansprüche 8 bis 10, wobei
eine in der ersten Autorisierungsanforderungsnachricht dargestellte PAN dieselbe ist wie eine in der zweiten Autorisierungsanforderungsnachricht dargestellte PAN.

12. System, das Folgendes umfasst:
eine Datenbank (450) zum Speichern von Daten, die einer Vielzahl von Händlern zugeordnet sind;
mindestens einen Kommunikationsknoten (440) zum Empfangen von Autorisierungsanforderungsnachrichten über Zahlungstransaktionen, die bei den mehreren Händlern initiiert werden; und
einen Prozessor (410), der dafür konfiguriert ist, die Schritte eines vorhergehenden Anspruchs auszuführen, um die Zahlungstransaktionen zu verarbeiten.

13. System nach Anspruch 12, wobei
die Datenbank (450) dafür konfiguriert ist, der Vielzahl von Händlern zu erlauben, Rabattregeln, die für die Zahlungstransaktionen gelten, hinzuzufügen oder zu ändern.

## Revendications

1. Procédé mis en oeuvre par ordinateur servant à traiter une transaction de paiement, comportant les étapes consistant à :
recevoir, au niveau d'un serveur de réseau (320), en provenance d'un serveur d'institution d'acquisition (310), un message de demande d'autorisation (340) servant à demander une autorisation de la transaction de paiement, la transaction de paiement ayant été initialisée au niveau d'un premier marchand et le message de demande d'autorisation comportant un montant de transaction (345) de la transaction de paiement ;
déterminer, au niveau du serveur de réseau (320), en fonction du message de demande d'autorisation, que la transaction de paiement a droit à un rabais ;
calculer, au niveau du serveur de réseau, un montant de transaction avec rabais pour la transaction de paiement (333), en fonction au moins du montant de transaction (345) et d'une première règle de rabais associée au premier marchand, dans lequel la première règle de rabais associée au premier marchand est l'une parmi une pluralité de règles de rabais associées au premier marchand, et dans lequel au moins l'un des critères définissant l'applicabilité de la première règle de rabais est qu'au moins l'un de la pluralité de champs de données dans le message de demande d'autorisation comporte des données représentant un PAN (primary account number - numéro de compte primaire) qui se trouve dans les limites d'une plage prédéterminée ;
transmettre, en provenance du serveur de réseau (320) à un serveur d'institution d'émission (330), un message de demande d'autorisation mis à jour (350) servant à demander une autorisation de la transaction de paiement pour le montant de transaction avec rabais ; et
dès la réception d'un message de réponse d'autorisation accordée (360) en provenance du serveur d'institution d'émission (330) en réponse au message de demande d'autorisation mis à jour (350)
transmettre, en provenance du serveur de réseau (320) au serveur d'institution d'acquisition (310), un autre message de réponse d'autorisation (370) servant à autoriser la transaction de paiement pour le montant de transaction avec rabais (365).

2. Procédé selon l'une quelconque des revendications précédentes, dans lequel
le message de demande d'autorisation (340) comporte une pluralité de champs de données, au moins l'un des champs de données représentant le montant de transaction (345).

3. Procédé selon la revendication 2, dans lequel
l'étape consistant à déterminer que la transaction de paiement a droit à un rabais comporte l'étape consistant à accéder à une base de données d'offres de marchand (450), la base de données d'offres de marchand comportant une pluralité de règles de rabais et de critères définissant l'applicabilité de chacune de la pluralité de règles de rabais, pour déterminer si le contenu de la pluralité de champs de données dans le message de demande d'autorisation satisfait aux critères pour l'application d'au moins l'une parmi la pluralité de règles de rabais.

4. Procédé selon la revendication 3, dans lequel
au moins l'un des critères définissant l'applicabilité de la première règle de rabais est qu'au moins l'un de la pluralité de champs de données dans le message de demande d'autorisation comporte des données représentant des informations associées au premier marchand.

5. Procédé selon l'une quelconque des revendications précédentes, comportant par ailleurs
l'étape consistant à générer le message de demande d'autorisation mis à jour (350) en remplaçant le montant de transaction (345) dans le message de demande d'autorisation par le montant de transaction avec rabais (355).

6. Procédé selon l'une quelconque des revendications précédentes, dans lequel
l'étape consistant à calculer le montant de transaction avec rabais (355) en fonction de la première règle de rabais comporte l'étape consistant à modifier le montant de transaction (345) pour réduire le montant de transaction selon un pourcentage prédéterminé.

7. Procédé selon l'une quelconque des revendications 1 à 5, dans lequel
l'étape consistant à calculer le montant de transaction avec rabais (355) en fonction de la première règle de rabais comporte l'étape consistant à modifier le montant de transaction (345) en soustrayant une somme fixe en provenance du montant de transaction.

8. Procédé selon l'une quelconque des revendications précédentes, comportant par ailleurs les étapes consistant à :
recevoir, au niveau d'un serveur de réseau (320), en provenance d'un deuxième serveur d'institution d'acquisition, un deuxième message de demande d'autorisation servant à demander une autorisation d'une deuxième transaction de paiement, la deuxième transaction de paiement ayant été initialisée au niveau d'un deuxième marchand et le deuxième message de demande d'autorisation comportant un deuxième montant de transaction de la deuxième transaction de paiement ;
déterminer, au niveau du serveur de réseau (320), en fonction du deuxième message de demande d'autorisation, que la deuxième transaction de paiement a droit à un rabais ;
calculer, au niveau du serveur de réseau (320), un deuxième montant de transaction avec rabais pour la deuxième transaction de paiement, en fonction au moins du deuxième montant de transaction et d'une deuxième règle de rabais associée au deuxième marchand ;
envoyer, en provenance du serveur de réseau (320) à un deuxième serveur d'institution d'émission, un deuxième message de demande d'autorisation mis à jour servant à demander l'autorisation de la deuxième transaction de paiement pour le deuxième montant de transaction avec rabais ; et
dès la réception d'un deuxième message de réponse d'autorisation accordée en provenance du deuxième serveur d'institution d'émission en réponse au deuxième message de demande d'autorisation mis à jour
transmettre, en provenance du serveur de réseau au deuxième serveur d'institution d'acquisition, un deuxième autre message de réponse d'autorisation servant à autoriser la deuxième transaction de paiement pour le deuxième montant de transaction avec rabais.

9. Procédé selon la revendication 8, dans lequel
le deuxième marchand et le premier marchand sont différents.

10. Procédé selon la revendication 8 ou la revendication 9, dans lequel
la deuxième règle de rabais et la première règle de rabais sont différentes.

11. Procédé selon l'une quelconque des revendications 8 à 10, dans lequel
un PAN représenté dans le premier message de demande d'autorisation est le même qu'un PAN représenté dans le deuxième message de demande d'autorisation.

12. Système comportant :
une base de données (450) servant à stocker des données associées à une pluralité de marchands ;
au moins un noeud de communication (440) servant à recevoir des messages de demande d'autorisation se rapportant à des transactions de paiement initialisées au niveau de la pluralité de marchands ; et
un processus (410) configuré pour effectuer les étapes selon l'une quelconque des revendications précédentes à des fins de traitement des transactions de paiement.

13. Système selon la revendication 12, dans lequel
la base de données (450) est configurée pour permettre à la pluralité de marchands d'ajouter ou de modifier des règles de rabais applicables aux transactions de paiement.
